# EUROPEAN PATENT APPLICATION

(11) **EP 2 708 318 A1**
(43) Date of publication of application: **19.03.2014**
(21) Application number: 12184635.6
(22) Date of filing: 17.09.2012
(51) Int. Cl.: B23Q 11/08

(54) **Protective covering device for machinery or equipment**

(71) Applicant: P.E.I. Protezioni Elaborazioni Industriali S.r.l., 40012 Calderara di Reno (Bologna) (IT)
(72) Inventor: Tabellini, Giorgio, 40037 Sasso Marconi (Bologna) (IT); Bissolo, Fulvio, 39055 Laives (Bolzano) (IT)
(74) Representative: Bianciardi, Ezio

(57) **Abstract**

A protective covering device for machinery or equipment comprising a working element (2) movable along a line (D) has a fixed covering member (4F) and a plurality of movable covering members (4M) which are coupled slidably to each other and to the fixed covering member (4F); each covering member (4F, 4M) comprises a box-shaped frame (6) mounting a first covering panel (10) and a second covering panel (11); in the front face (A) to rear face (P) direction, the frames (6) are contained inside each other and the set of first panels (10) and the set of second panels (11) overlap in tile-like fashion and form, respectively, first and second matching portions (12', 12") of a front covering wall (12), separated from each other by a window (14) through which the working element (2) projects outwards; for each movable frame (6), there is at least one supporting member (15) slidably coupled thereto and located on the opposite side of the front wall (12) with respect to the frame (6).

## Description

This invention relates to a protective covering device for machinery or equipment.

The device according to the invention can be associated with the working parts of automatic machines, machine tools or robotized equipment systems and can be advantageously applied to many different industrial sectors.

In this specification express reference is made, but without limiting the scope of the invention, to machine tools, whose component parts very often require protection against liquids, swarf, dust or other process waste.

The liquids which the protective covering device must keep out of the machine tool are, in particular, those sprayed onto the working element from above in order to lubricate and cool the machine's working tool.

Italian utility model No. 247452, in the name of the same applicant as this invention, describes a protective covering device which can be associated with the working element of a machine tool. The working element moves in a straight line in both directions and the protective covering device is designed to follow the movements of the working element and to cover and protect a corresponding zone of the machine from which the working element projects in cantilever fashion.

The protective covering device comprises a plurality of overlapping covering panels, the first of which is fixable to the machine at the zone to be protected, while the other panels move slidably relative to each other and relative to the first panel along the line of movement of the working element.

Each covering panel has a respective rectangular opening designed to allow the working element to pass through it. More specifically, the opening of the first panel defines an area to be covered by the other movable panels and the openings in the other panels gradually decrease in size starting from the one facing the first panel. The movable covering panel located on the side opposite the first panel with respect to the set of movable panels is designed to be engaged and driven directly by the working element along the above mentioned straight-line path, while each of the other movable panels is engaged and driven by an abutment wing on the movable panel adjacent to it on the outside.

Thus, as the working element moves along the above mentioned path, the movable panels at the different working positions cover corresponding rectangular portions of the area defined by the opening of the first panel.

Each panel comprises a first and a second plate longitudinally opposite and coplanar with one another, and connected by two longitudinal bands extending parallel to the line of movement of the working element. The plates and bands surround and define the respective opening mentioned above.

In the context of the covering device, the respective panels are mounted in sliding contact with each other and the sets of first and second plates respectively define first and second complementary portions of a covering wall. More precisely, the first and second sets of plates are located on opposite sides of the working element along its line of movement and overlap each other in tile-like fashion.

From one longitudinal end of the covering wall to the other, the plates of the first portion overlap in tile-like fashion in one direction and the plates of the second portion overlap in tile-like fashion in the opposite direction. In other words, the tile-like overlapping configuration of the plates is symmetrical about the working element.

That means that if the protective covering device is mounted and moves in a vertical or substantially vertical direction, one set of tile-like overlapping plates is positioned in such a way that liquids, swarf, dust or other processing waste flow correctly from one plate to the next, whereas the other set of tile-like overlapping plates is positioned in such a way that liquids, swarf, dust or other processing waste become trapped between each plate and the next one under it. For this reason, if the protective covering element is mounted and moves in a vertical or substantially vertical direction, it is oriented in such a way that the set of tile-like plates which overlap in the correct direction is positioned underneath, below the working element, where most of the liquids, swarf, dust or other processing waste collect. Another protective covering device of the type considered here is described in Japanese patent No.62044347.

The protective covering device described in Japanese patent No.62044347 comprises a set of covering elements which are slidably coupled to each other and consist of a first covering element fixable to the machine or piece of equipment at a zone to be protected, and a plurality of covering elements which are movable relative to each other and relative to the first element.

Each covering element comprises a box-shaped frame composed of four walls facing and opposite each other in pairs around a rectangular perimeter. More precisely, two longitudinal walls extend parallel to the line of movement of the working element, while the other two extend at right angles thereto.

The frame supports two cover plates, both positioned at a right angle to the walls of the frame. A first cover plate flushly closes part of one of the two opposed rectangular openings delimited by the four walls of the frame, while the second cover plate projects outwards from the frame in cantilever fashion on the side opposite the first cover plate with respect to the above mentioned opening.

In the context of the covering device, the sets of first and second cover plates respectively define first and second complementary portions of a covering wall.

More precisely, the first and second cover plates are located on opposite sides of the working element along its line of movement and overlap each other in tile-like fashion in the same direction. In other words, from one longitudinal end of the covering wall to the other, the cover plates of the first portion overlap in tile-like fashion in one direction and the cover plates of the second portion overlap in tile-like fashion in the same direction.

In this case therefore, unlike that of Italian utility model No. 247452, if the protective covering device is mounted and moves vertically or substantially vertically, both sets of overlapping tile-like cover plates can be positioned in such a way that liquids, swarf, dust or other processing waste can flow correctly from one plate to the next one under it.

The protective covering device described in Japanese patent No. 62044347, however, although it provides a better and more effective protection than that provided by Italian utility model No. 247452, is structurally rather unstable. Indeed, especially when the working element operates at very high speeds, the covering elements sliding over each other tend to oscillate, causing vibrations, clattering and stresses which are harmful not only to the protective covering device itself but also to the machine to be protected.

Moreover, although more effective, the screen provided is inadequate along the two longitudinal flanks of the covering wall. In effect, at each of the two flanks, the lateral edges of the cover plates are substantially aligned with each other and a gap is created between these edges and the fixed box-shaped element, that is, the outermost element, allowing liquids, swarf, dust or other process waste to pass through.

The aim of this invention is to provide a protective covering device for machinery or equipment which is structurally stable and which, at the same time, provides an effective screen against liquids, swarf, dust or other process waste.

The invention accordingly provides a protective covering device for machinery or equipment according to one or more of the appended claims.

The invention will now be described by way of a non-limiting example with reference to the accompanying drawings in which:
Figure 1 is a perspective view of a first embodiment of the device according to the invention;
Figure 2 is a perspective cutaway view of the device of Figure 1;
Figure 3 is a plan view of the device of Figure 1;
Figure 4 is a cross section through the line IV-IV of the view of Figure 3;
Figure 5 is a cross section through the line V-V of the view of Figure 3;
Figure 6 is a perspective view of a component of the device of Figure 1;
Figures 7-11 are perspective cutaway views of respective variants of the device of Figure 1;
Figure 12 is a perspective view of a further embodiment of the device according to the invention;
Figure 13 is a perspective cutaway view of the device of Figure 12;
Figure 14 is a plan view of the device of Figure 12;
Figure 15 is a cross section through the line XV-XV of the view of Figure 14;
Figure 16 is a cross section through the line XVI-XVI of the view of Figure 14;
Figure 17 is a perspective cutaway view of a variant of the device of Figure 12.

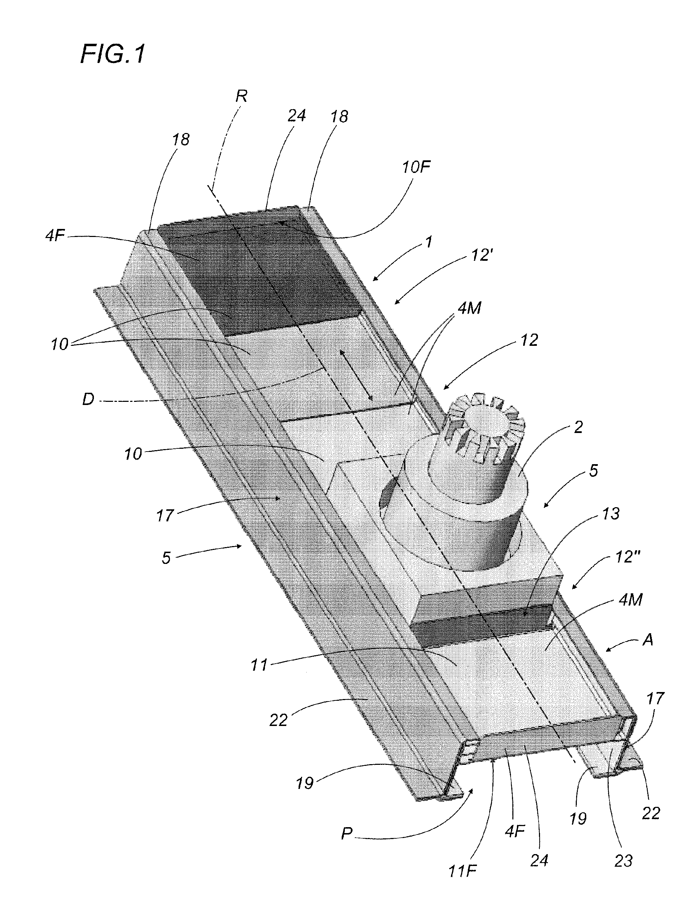

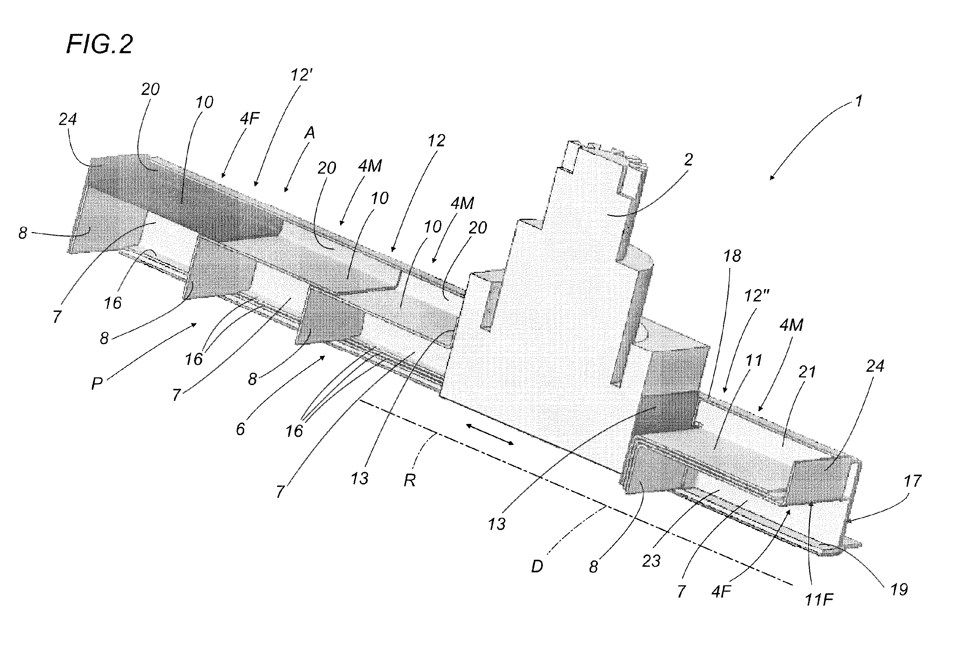

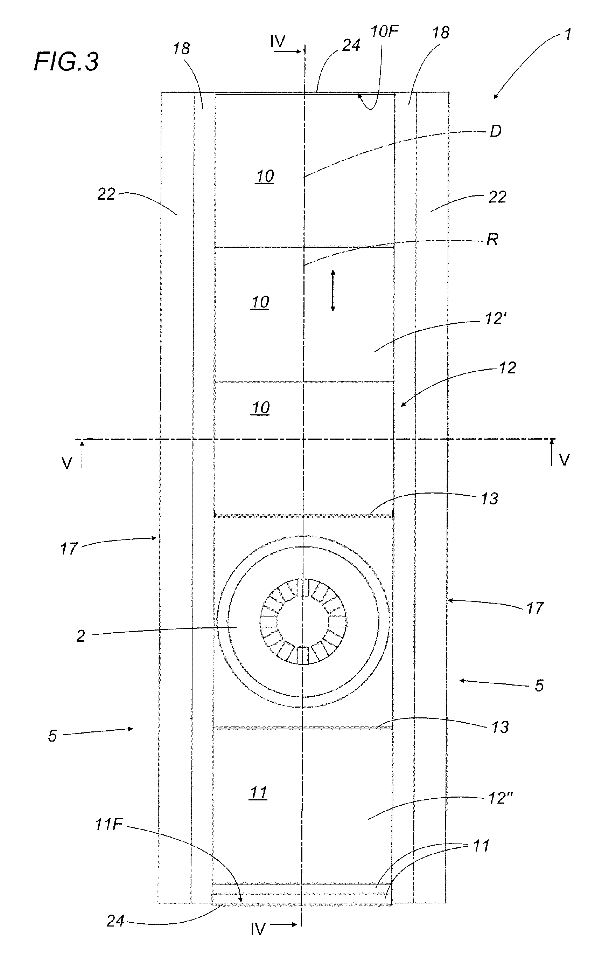

With reference to Figures 1-5, the reference numeral 1 denotes in its entirety a protective covering device for machinery or equipment.

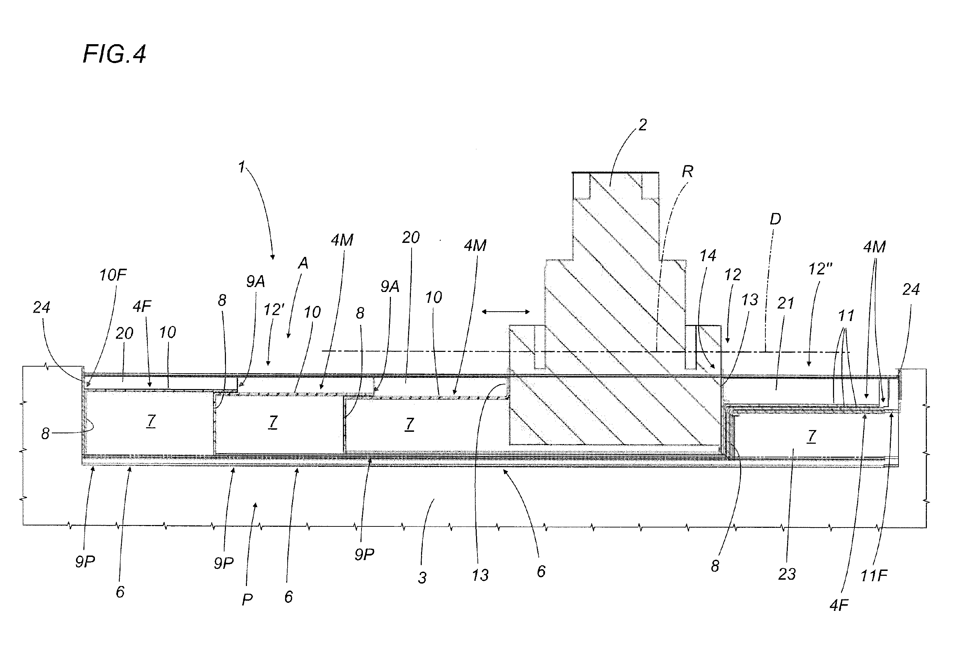

The device 1 is associated with a working element 2 of a machine tool 3 which is illustrated schematically in Figure 4 and whose component parts require protection against liquids, swarf, dust or other process waste.

The working element 2 is movable along a line D. More specifically, the working element 2 is movable along a vertical or substantially vertical, straight path R.

The device 1 comprises a plurality of covering members 4 which are slidably coupled to each other and of which a first covering member 4F is fixed to the machine 3 at the zone to be protected and a plurality of covering members 4M are movable relative to each other and relative to the first covering member 4F along the line of movement D of the working element 2.

The device 1 has two longitudinal flanks 5 which extend parallel to the line D of movement of the working element 2. Thus, in use, the flanks 5 are positioned vertically or substantially vertically.

The device 1 has a front face A, from which the working element 2 projects outwards, and a rear face P, which faces the zone to be protected.

Each covering member 4 comprises a box-shaped frame 6 which is laterally defined by two opposite facing longitudinal walls 7 extending along the flanks 5 of the device 1, and by two transversal walls 8 each of which joins the two longitudinal walls 7 and form, with the longitudinal walls 7, a front opening 9A through which the working element 2 projects outwards, and a rear opening 9P facing the zone to be protected.

More specifically, both the longitudinal walls 7 and the transversal walls 8 have a rectangular shape. Further, the transversal walls 8, too, are opposite and face each other. More precisely, the longitudinal walls 7 extend parallel to the line D, whereas the transversal walls 8 extend at right angles to the line D.

In their entirety, the walls 7 and 8 run all the way around a rectangular perimeter.

The frames 6 of the movable covering members 4M increase in size relative to each other, from the smallest to the largest, and are contained inside each other and all of them inside the frame 6 of the first covering member 4F.

As the covering members 4 slide relative to each other, the longitudinal walls 7 slide over each other, while the transversal walls 8 of each movable member 4M are free to slide transversely into the outwardly adjacent covering member 4 until abutting against the corresponding transversal wall 8 thereof.

On the side of the front face A of the device 1, each frame 6 mounts a first panel 10 and a second panel 11 which are longitudinally opposite each other, that is to say, opposite each other along the line D.

The first panel 10 extends at a right angle from a first transversal wall 8 of the frame 6 inwardly of the selfsame frame 6. More specifically, the first panel 11 extends in the shape of a T from the first transversal wall 8 of the frame 6.

The second panel 11 extends at a right angle on the outside of the second transversal wall 8 of the frame 6. More specifically, the second panel 11 extends in the shape of an L outwards from the second transversal wall 8 of the frame 6.

The set of first panels 10 and the set of second panels 11 partly overlap each other in tile-like fashion in the same direction and respectively define first and second complementary portions 12', 12" of a front covering wall 12. More precisely, as better illustrated in Figure 4, in the front face A to rear face P direction, the first panel 10 of each frame 6 partly overlaps slidably in tile-like fashion the first panel 10 of the smaller frame 6 adjacent thereto, that is, on the inside of it, and the second panel 11 of each frame 6 partly overlaps slidably in tile-like fashion the second panel 11 of the larger frame 6 adjacent thereto, that is, on the outside of it. Thus, the first panel 10 of the first covering member 4F is positioned in front of the set of first panels 10 and the second panel 11 of the first covering member 4F is positioned behind the set of second panels 11.

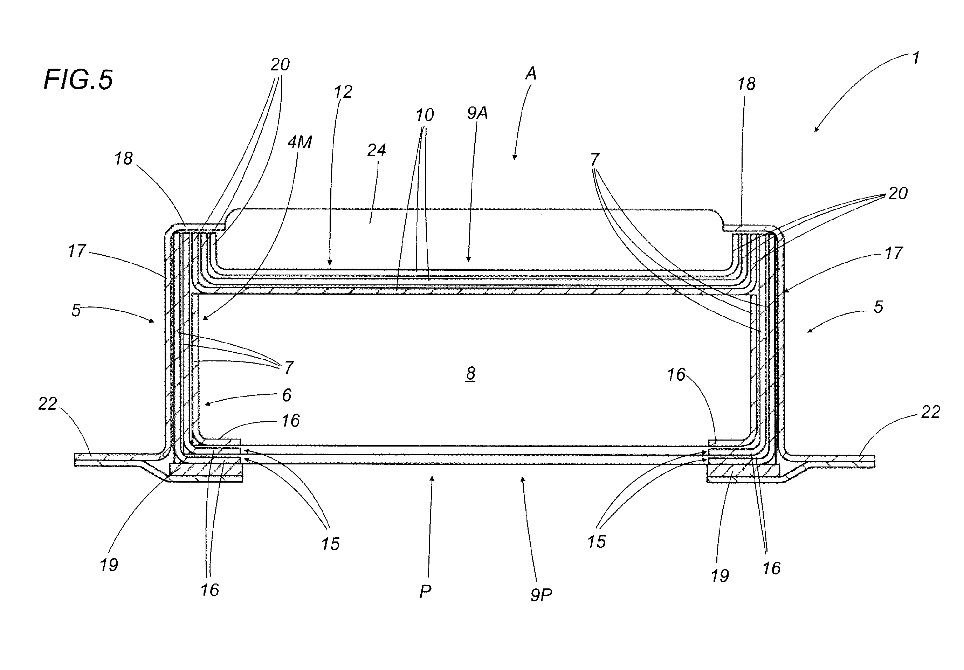

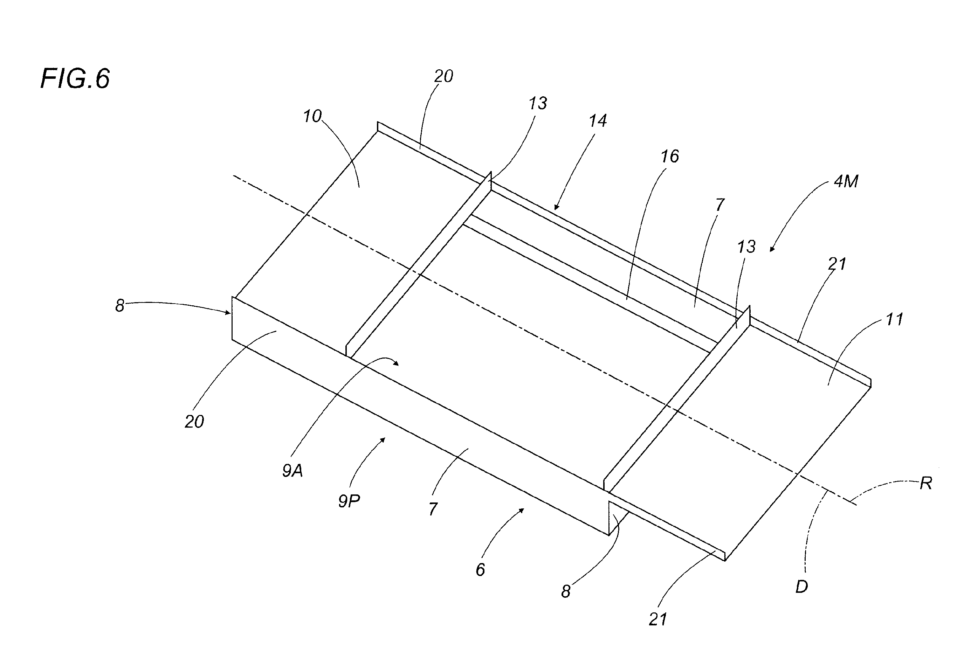

As better illustrated in Figures 5 and 6, the smallest of all the movable covering members 4M differs from the other movable covering members 4M in that its first panel 10 is positioned in continuity with its longitudinal walls 7 instead of being spaced from them. In other words, in the smallest of all the movable covering members 4M, the first panel 10 extends in bridge-like fashion across the respective longitudinal walls 7 and longitudinally delimits the respective opening 9A.

Also, in the smallest of all the movable covering members 4M, two wings 13 project at a right angle outwards from the first panel 10 and from the second panel 11 at the opposite longitudinal ends of the opening 9A.

The wings 13 longitudinally delimit a front window 14 which separates from each other the above mentioned first and second portions 12', 12" of the covering wall 12. The working element 2 projects outwards from the window 14 and directly engages the wings 13.

Thus, the smallest of all the movable covering members 4M is designed to be engaged and driven directly by the working element 2, whereas the other movable members 4M are progressively engaged and driven by the frame 6 of the inwardly adjacent movable member 4M when the working element 2 moves along the line D.

As better illustrated in Figure 5, the covering device 1 comprises, for each movable frame 6, at least one supporting member 15 slidably coupled to the frame.

The supporting member 15 is located at the back, that is, on the opposite side of the front wall 12 with respect to the frame 6.

The supporting member 15 of each movable frame 6 is opposite the first panel 10 of the movable frame 6 itself, that is to say, it is located on the side opposite the first panel 10 with respect to the frame 6, to guide and constrain the movement of the movable frame 6, and hence of the entire movable covering member 4M, solely along the line of movement D of the working element 2.

The supporting member 15 of each movable frame 6 is also opposite the first panel 10 of the larger adjacent frame 6, that is, the outwardly adjacent one.

More specifically, the covering device 1 comprises, for each movable frame 6, a pair of supporting members 15 slidably coupled to the back of the frame 6.

The supporting members 15 extend longitudinally along the line of movement D of the working element 2 and transversely at a right angle to the flanks 5 of the device 1.

The supporting members 15 are located at the rear opening 9P of the movable covering member 4M.

The supporting members 15 are slidably coupled to the respective longitudinal walls 7 of the movable covering member 4M.

The supporting members 15 extend from the outwardly adjacent covering member 4. That way, each movable covering member 4M is telescopically coupled to the covering member 4 adjacent to it.

More specifically, the supporting members 15 are defined by respective projections 16 of the longitudinal walls 7 of the outwardly adjacent covering member 4. Each projection 16 extends in the shape of an L from the respective longitudinal wall 7 towards the inside of the device 1.

In other words, the projections 16 of the fixed covering member 4F partly close the rear opening 9P of the fixed covering member 4F and form a guide rail for the movable covering member 4M adjacent to it.

The projections 16 of the latter partly close the respective rear opening 9P and form a guide rail for the adjacent movable covering member 4M, and so on.

The smallest of all the movable covering members 4M also has two projections 16 which are slidably coupled to the respective supporting members 15 formed by the projections 16 of the adjacent movable member 4M.

As the covering members 4 slide relative to each other, the projections 16 slide over each other.

The device 1 also comprises, for each of the two flanks 5, a moulding 17, which, with a front longitudinal protecting edge of it 18, extends in L-shaped fashion over the covering wall 12, beyond the flank 5. The function of the front longitudinal protecting edge 18 is to cover and protect a corresponding lateral band of the covering wall 12.

The moulding 17 also comprises, on the side opposite the front longitudinal protecting edge 18, a rear longitudinal edge 19 located at the rear opening 9P of the first covering member 4F.

As better illustrated in Figure 5, the edge 19 is placed over and in contact with the corresponding projection 16 of the fixed covering member 4F.

The edges 18 and 19 give the moulding 17 a C-shaped transversal profile.

At each of the flanks 5, each first panel 10 has a first longitudinal flange 20 extending in the shape of an L from the first panel 10 itself. The flanges 20 overlap in tile-like fashion like the respective first panels 10 and extend outwards from the front face A of the device 1. The flanges 20 are slidably coupled in contact with the respective front longitudinal edge 18 of the moulding 17 in such a way as to sealedly close the front face A of the device 1 and to prevent penetration of liquids, swarf, dust or other process waste.

Further, at each of the flanks 5, each second panel 11 has a second longitudinal flange 21 extending in the shape of an L from the second panel 11 itself.

The flanges 21 overlap in tile-like fashion like the respective second panels 11 and extend outwards from the front face A of the device 1. The flanges 21 are slidably coupled in contact with the respective front longitudinal edge 18 of the moulding 17 in such a way as to sealedly close the front face A of the device 1 and to prevent penetration of liquids, swarf, dust or other process waste.

It should be noted that the first flanges 20 of each movable covering member 4M slide in the space between the first panel 10 and the corresponding longitudinal walls 7 of the outwardly adjacent covering member 4.

It should also be noted that the longitudinal walls 7 of all the covering members 4 are in substantial contact with the respective edges 18, on which the movable walls 7 slide when the working element 2 moves along the line D.

The mouldings 17, besides closing and protecting the flanks 5 of the device 1 against penetration of liquids, swarf, dust or other process waste, make the device 1 stiffer and allow the device 1 to be fastened to the machine tool 3 more quickly and securely. For this purpose, each moulding 17 has an external fastening flange 22 positioned in substantially the same plane as the edge 19. The flange 22 may be fastened to the machine tool 3 by any known fastening means, for example by screws.

A further lateral protection is provided by the covering member 4F and, more precisely, by the extension 23 of its longitudinal walls 7 beyond the transversal wall 8 which borders on the second panel 11. In other words, the longitudinal walls 7 of the covering member 4F extend between the longitudinal ends 10F and 11F of the panels 10 and 11 along the entire covering member 4F.

From the longitudinal ends 10F and 11F there extend, in particular at a right angle to the respective panels 10 and 11, two further flanges 24 for securely fastening the device 1 to the machine tool 3. Like the flanges 22, the flanges 24, too, may be fastened to the machine tool 3 by any known fastening means, for example by screws.

Thanks to the supporting members 15, the device 1 is extremely stable. Especially during operation, even at the highest speeds of the working element 2, the sliding of the covering members 4 relative to each other is free of harmful and noisy oscillations and/or vibrations. Stability and stiffness are enhanced by the mouldings 17, which also have a screening and protective function.

It should be noted that the device 1 might also be installed horizontally, as well as vertically as described above. It is, however, important to stress that in the most critical case where the device 1 is installed vertically, the arrangement of the panels 10 and 11 is such that both sets of panels 10, 11 overlap in tile-like fashion in such a way that liquids, swarf, dust or other process waste can flow correctly from each panel 10, 11 to the next one under it without allowing the liquids, swarf, dust or other process waste to penetrate between the panels 10, 11 into the device 1.

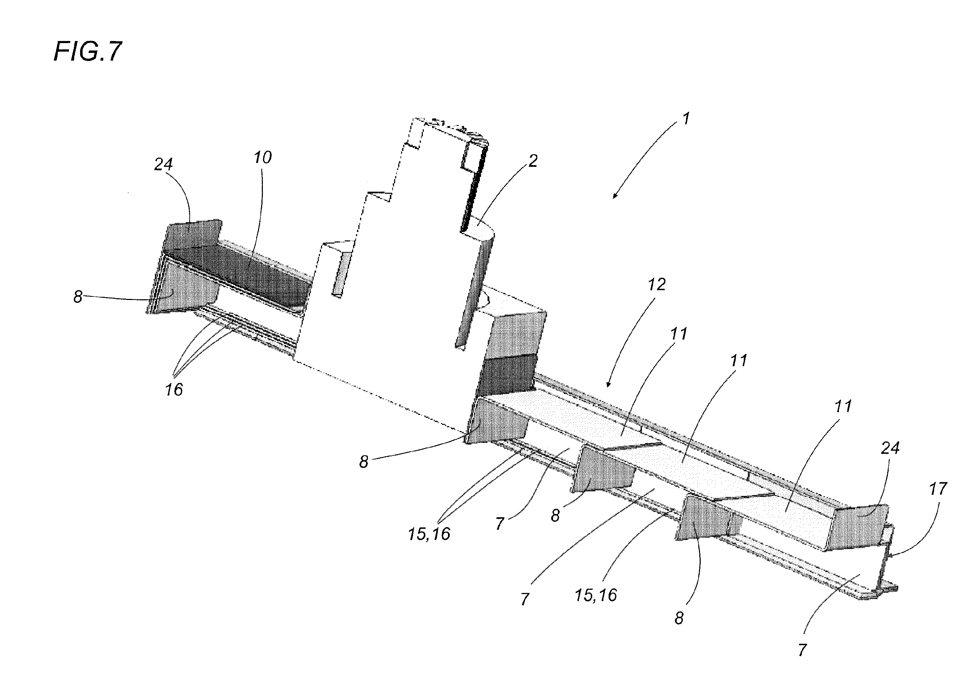

Figure 7 shows a variant of the device 1 described above, without the flanges 20 and 21. In this case, in each covering member 4, the first panel 10 extends in bridge-like fashion across the respective longitudinal walls 7 and longitudinally delimits the respective opening 9A.

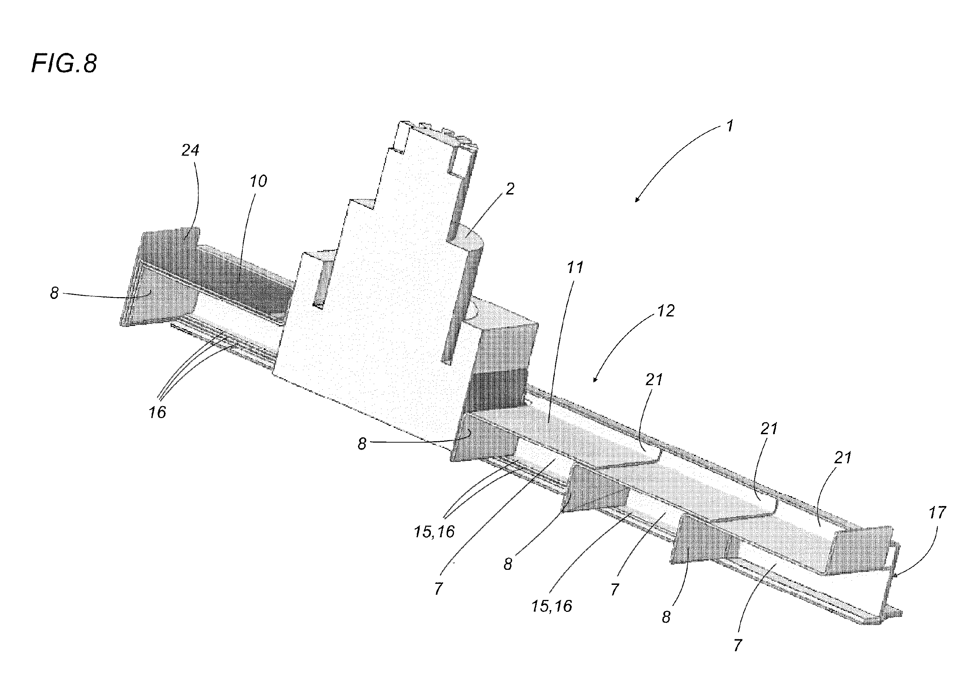

Figure 8 shows a variant of the above described device 1 with reference to Figures 1-6, without the flanges 20. In this case, in each covering member 4, the first panel 10 extends in bridge-like fashion across the respective longitudinal walls 7 and longitudinally delimits the respective opening 9A.

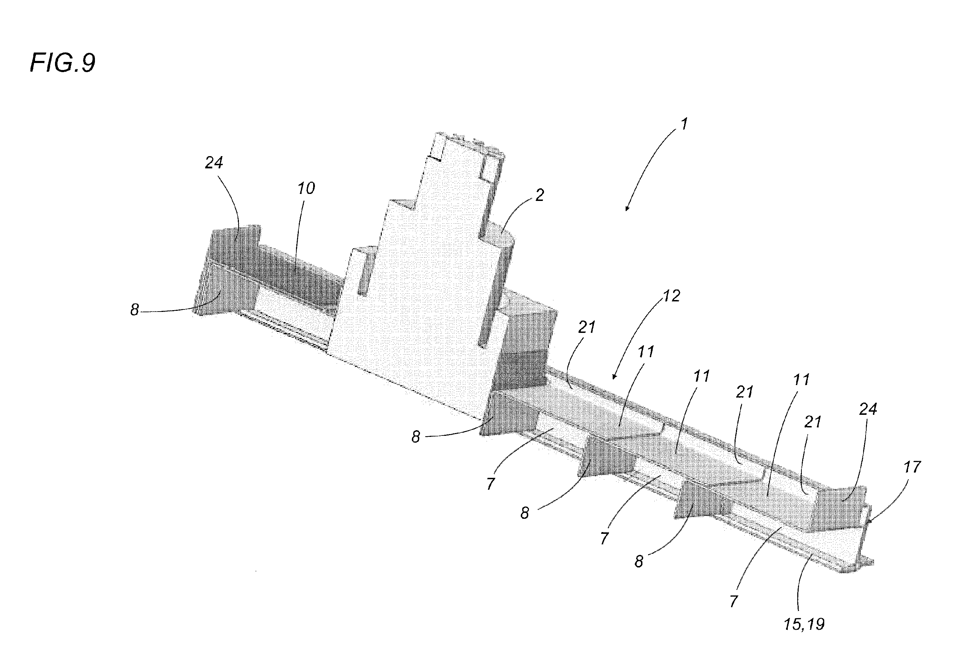

Figure 9 shows a variant of the device 1 described above with reference to Figure 8, also without the projections 16.

In this case, the two edges 19 which partly close the rear opening 9P of the first covering member 4F each form a supporting member 15 common to all the movable covering members 4M. In other words, when the working element 2 moves along the line D, the movable longitudinal walls 7 slide on the edges 19, which thus act as guide rails for all the movable covering members 4M.

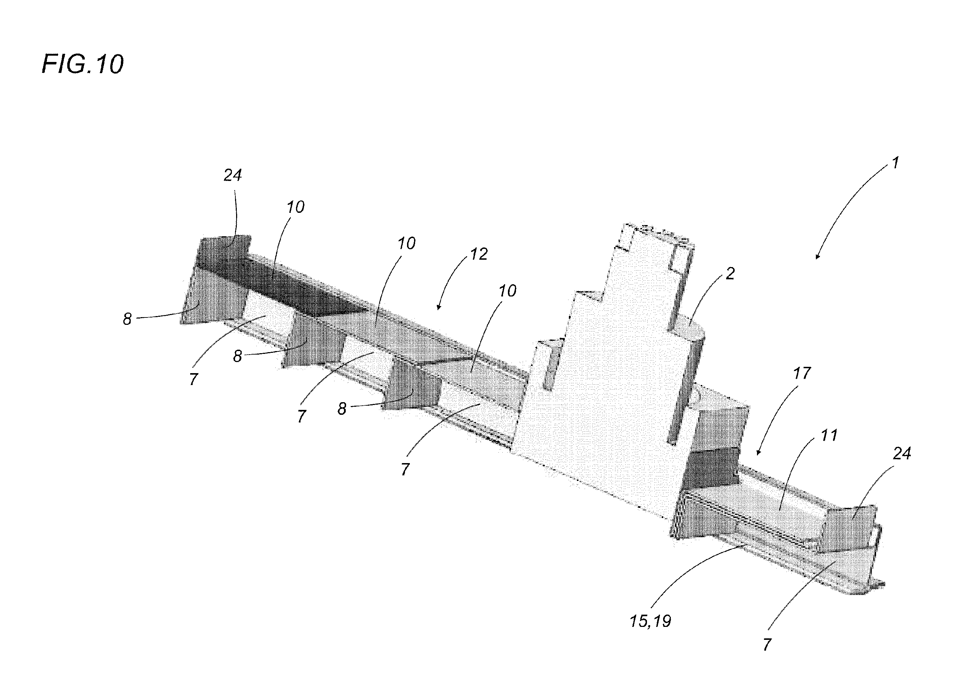

Figure 10 shows a variant of the device 1 described above with reference to Figure 9, also without the flanges 21.

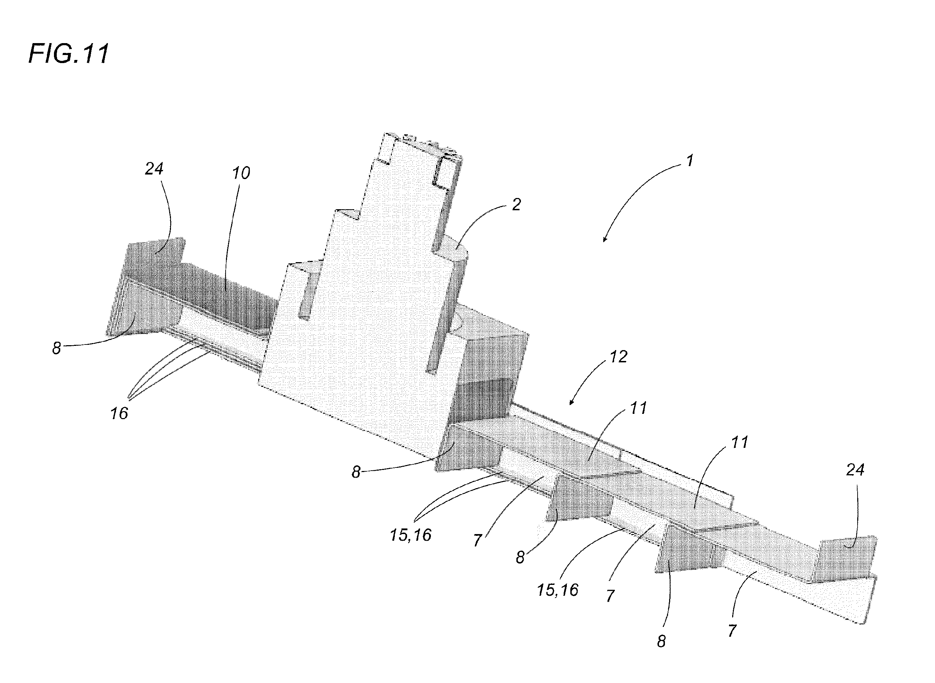

Figure 11 shows a variant of the device 1 described above with reference to Figure 7, also without the mouldings 17.

In this case, the device 1 is fastened to the machine tool 3 only by the two flanges 24.

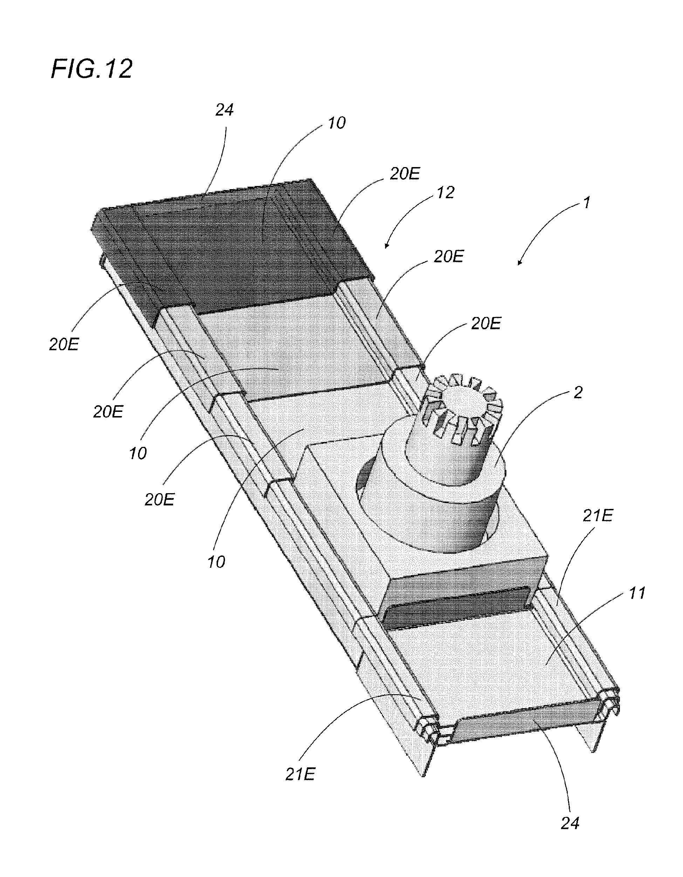

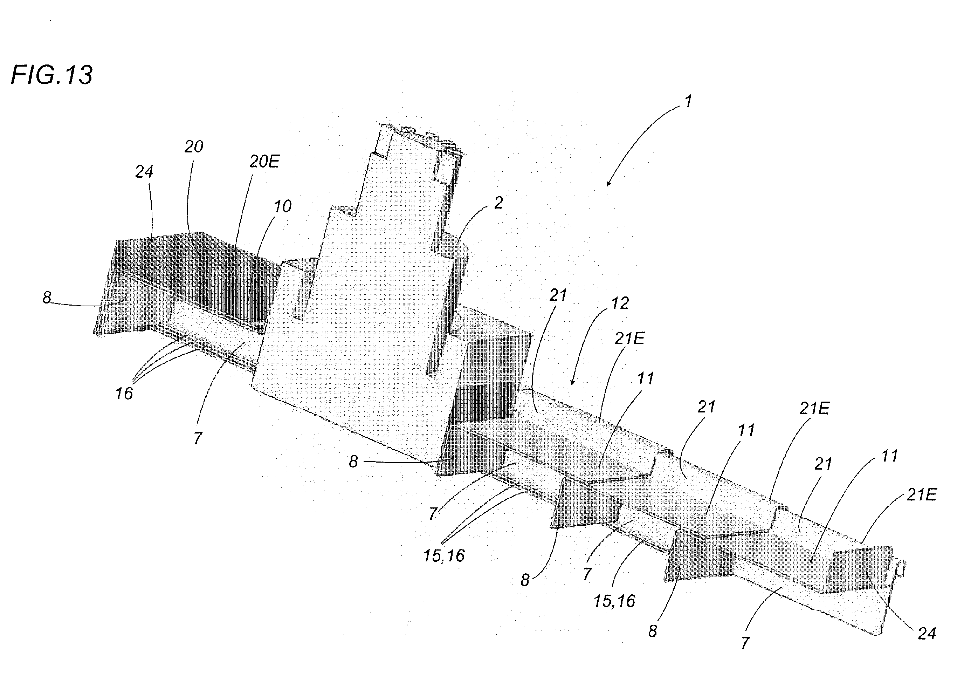

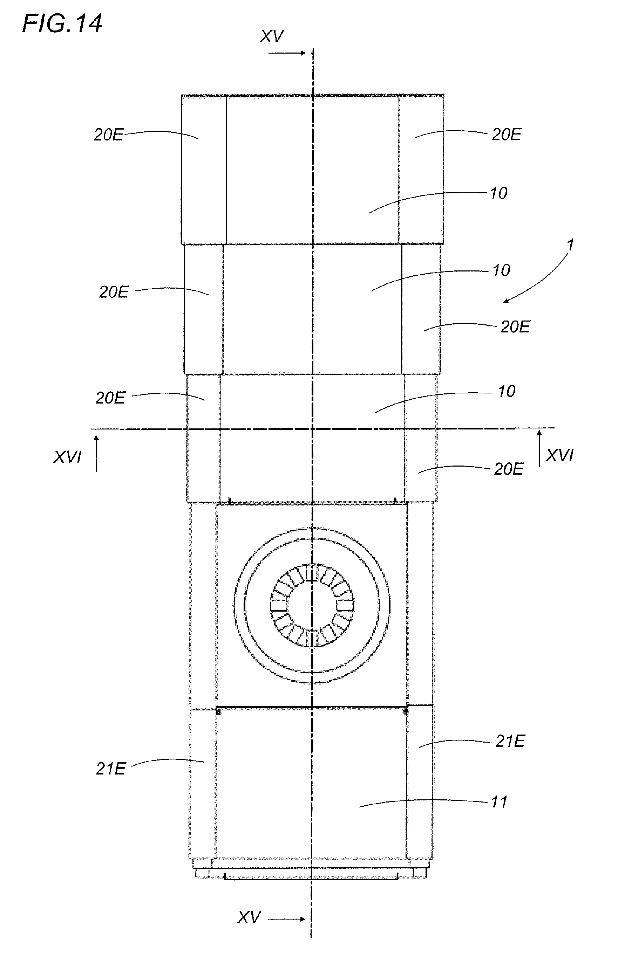

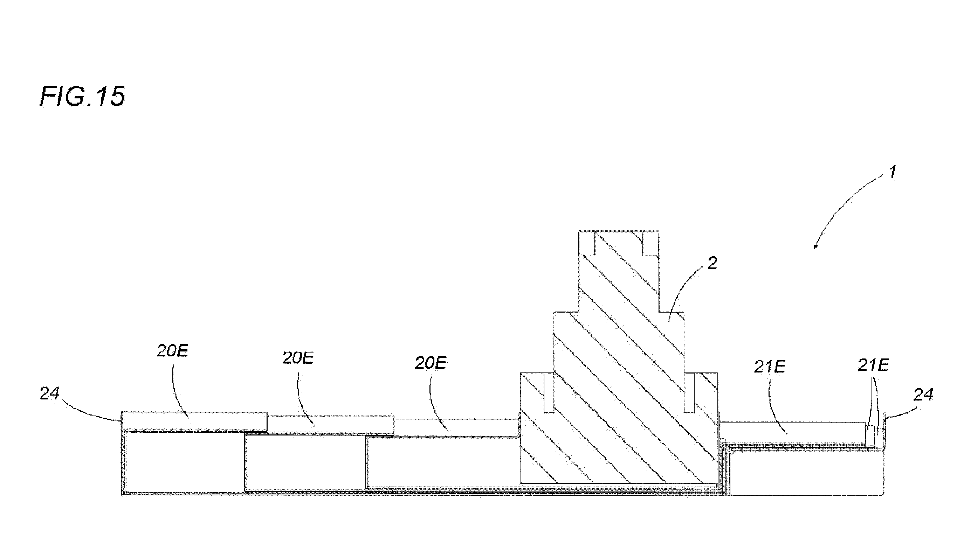

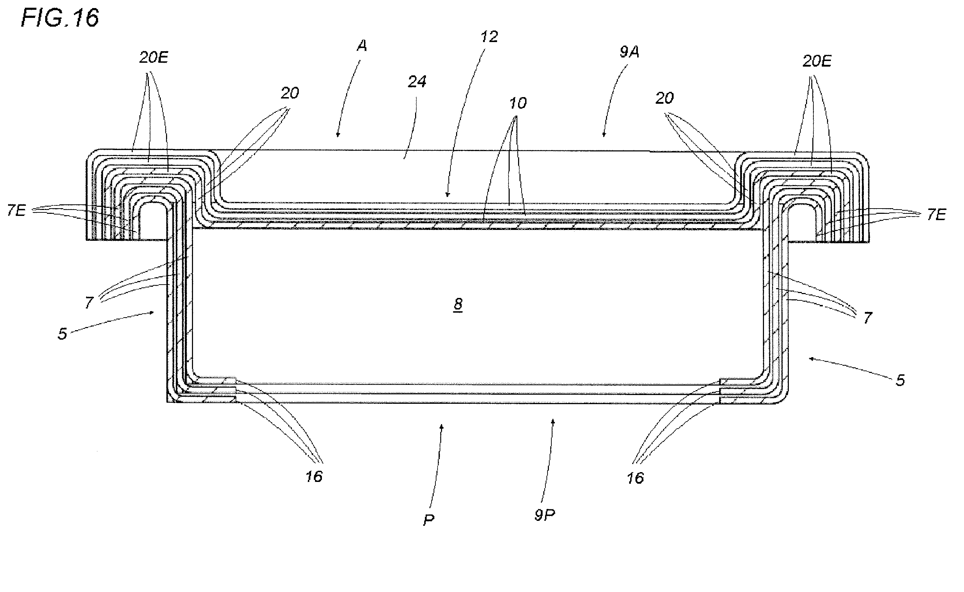

Figures 12-16 show a variant of the device 1 described above with reference to Figures 1-6, without the mouldings 17. On the side opposite the respective first panel 10, the first end 20E of each first longitudinal flange 20 is bent into the shape of a U and, on the side opposite the respective second panel 11, the first end 21E of each second longitudinal flange 21 is bent into the shape of a U.

With their concavities, the ends 20E face outwardly of the respective first panels 10 and they overlap in tile-like fashion like the respective first panels 10. In the same way, with their concavities, the ends 21E face outwardly of the respective second panels 11 and they overlap in tile-like fashion like the respective second panels 11.

The ends 7E of the longitudinal walls 7, too, like those of the flanges 20 and 21, are bent into the shape of U on the side opposite the projections 16.

With their concavities, the ends 7E face outwardly of the frames 6 and they too overlap in tile-like fashion.

In this case, the device 1 is fastened to the machine tool 3 solely by the two flanges 24 and protection along the lateral bands of the wall 12 is provided by the tile-like overlapping of the ends 20E and 21E.

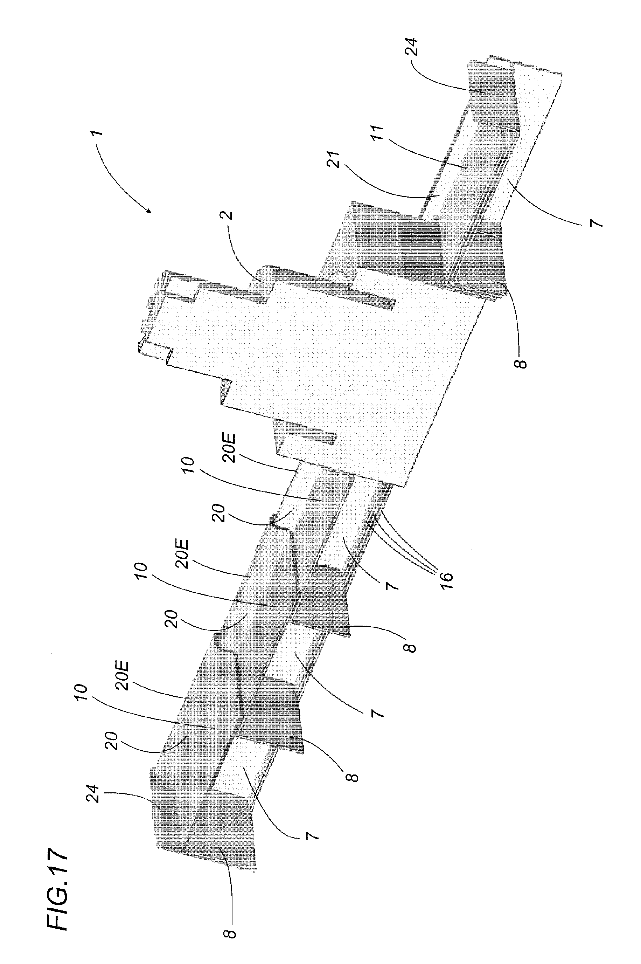

Figure 17 shows a variant of the device 1 described above with reference to Figures 12-16, where only the ends 20E are bent into a U shape and are slidably coupled to each other in tile-like fashion.

The invention is susceptible of industrial application and may be modified and adapted in several ways without thereby departing from the scope of the inventive concept. Moreover, all the details of the invention may be substituted for technically equivalent elements.

## Claims

1. A protective covering device for machinery or equipment comprising a working element (2) movable along a line (D); the device (1) having a front face (A), from which the working element (2) projects outwards, and a rear face (P), which faces the zone to be protected, and comprising a first covering member (4F), which is fixable to the machine or equipment at the zone to be protected, and a plurality of covering members (4M) which are movable relative to each other and relative to the first covering member (4F) along the line of movement (D) of the working element (2); each covering member (4F, 4M) comprising a box-shaped frame (6); the frames (6) of the movable covering members (4M) increasing in size relative to each other, from the smallest to the largest, and being contained inside each other and all of them inside the frame (6) of the first covering member (4F); each frame (6) mounting a first covering panel (10) and a second covering panel (11); in the front face (A) to rear face (P) direction, the first panel (10) of each frame (6) partly overlapping slidably in tile-like fashion the first panel (10) of the smaller frame (6) adjacent thereto, and the second panel (11) of each frame (6) partly overlapping slidably in tile-like fashion the second panel (11) of the larger frame (6) adjacent thereto; the set of first panels (10) and the set of second panels (11) forming, respectively, first and second matching portions (12', 12") of a front covering wall (12), separated from each other by a window (14) through which the working element (2) projects outwards; the covering device (1) being **characterized in that** it comprises, for each movable frame (6), at least one supporting member (15) slidably coupled thereto; the supporting member (15) being located on the opposite side of the front wall (12) with respect to the frame (6).

2. The device according to claim 1, having two longitudinal flanks (5), extending parallel to the line of movement (D) of the working element (2); each box-shaped frame (6) being laterally defined by two opposite facing longitudinal walls (7) extending along the flanks (5) of the device, and by two transversal walls (8) each of which joins the two longitudinal walls (7) and form, with the longitudinal walls, a front opening (9A) through which the working element (2) projects outwards, and a rear opening (9P) facing the zone to be protected; the supporting member (15) being provided for at least one longitudinal wall (7) of each movable covering member (4M), and being slidably coupled thereto; the supporting member (15) extending longitudinally along the line of movement (D) of the working element (2) and transversally square relative to the flanks (5) of the device (1); the movement of the movable covering member (4M) being guided and constrained by the supporting member (15) along the line of movement (D) of the working element (2).

3. The device according to claim 2, wherein the first panel (10) extends from a transversal wall (8) of the frame (6) and across the longitudinal walls (7) of the frame (6), and the second panel (11) projects outwards in cantilever fashion from the other transversal wall (8) of the frame (6).

4. The device according to claim 2 or 3, wherein the supporting member (15) is located at the rear opening (9P) of the movable covering member (4M).

5. The device according to any of the claims from 2 to 4, wherein the supporting member (15) is positioned to partly close the rear opening (9P) of the first covering member (4F) and is in common with all the movable covering members (4M).

6. The device according to any of the claims from 2 to 4, wherein the supporting member (15) extends from the outwardly adjacent covering member (4F, 4M); each movable covering member (4M) being telescopically coupled to the adjacent covering member (4F, 4M).

7. The device according to any of the claims from 1 to 6, having two longitudinal flanks (5), extending parallel to the line of movement (D) of the working element (2), and comprising, for each of the two flanks (5), a moulding (17), which, with a front longitudinal protecting edge of it (18), extends in L-shaped fashion over the covering wall (12) beyond the flank (5); the front longitudinal edge (18) covering and protecting a corresponding lateral band of the covering wall (12).

8. The device according to any of the claims from 1 to 5, having two longitudinal flanks (5), extending parallel to the line of movement (D) of the working element (2), and comprising, for each of the two flanks (5), a moulding (17), which, with a front longitudinal protecting edge of it (18) extends in L-shaped fashion over the covering wall (12) beyond the flank (5); the front longitudinal edge (18) covering and protecting a corresponding lateral band of the covering wall (12); the moulding (17) comprising, on the opposite side of the front longitudinal edge (18), a rear longitudinal edge (19) defining the supporting member (15) of the movable covering members (4M).

9. The device according to any of the claims from 1 to 6, having two longitudinal flanks (5), extending parallel to the line of movement (D) of the working element (2), and comprising, for each of the two flanks (5), a moulding (17), which, with a front longitudinal protecting edge of it (18), extends in L-shaped fashion over the covering wall (12) beyond the flank (5); the front longitudinal edge (18) covering and protecting a corresponding lateral band of the covering wall (12); the moulding (17) comprising, on the opposite side of the front longitudinal edge (18), a rear longitudinal edge (19) located at the rear opening (9P) of the first covering member (4F).

10. The device according to any of the claims from 1 to 9, having two longitudinal flanks (5), extending parallel to the line of movement (D) of the working element (2), and wherein, at each of the flanks (5), each first panel (10) has a first longitudinal flange (20) extending in L-shaped fashion from the first panel (10) itself; the first longitudinal flanges (20) overlapping each other in tile-like fashion like the respective first panels (10), and extending outwards from the front face (A) of the device (1).

11. The device according to claims 7 and 10, **characterized in that** the first longitudinal flanges (20) are slidably coupled in contact with the respective front longitudinal edge (18) of the moulding (17).

12. The device according to claim 10, **characterized in that** the first end (20E) of each first longitudinal flange (20) on the opposite side of the respective first panel (10) is bent into a U shape; the concavity of the first end (20E) facing the outside of the first panel (10); the first ends (20E) overlapping each other in tile-like fashion like the respective first panels (10).

13. The device according to any of the claims from 1 to 12, having two longitudinal flanks (5), extending parallel to the line of movement (D) of the working element (2), and wherein, at each of the flanks (5), each second panel (11) has a second longitudinal flange (21) extending in L-shaped fashion from the second panel (11) itself; the second longitudinal flanges (21) overlapping each other in tile-like fashion like the respective second panels (11), and extending outwards from the front face (A) of the device (1).

14. The device according to claims 7 and 13, **characterized in that** the second longitudinal flanges (21) are slidably coupled in contact with the respective front longitudinal edge (18) of the moulding (17).

15. The device according to claim 13, **characterized in that** the second end (21E) of each second longitudinal flange (21) on the opposite side of the respective second panel (11) is bent into a U shape; the concavity of the second end (21E) facing the outside of the second panel (11); the second ends (21E) overlapping each other in tile-like fashion like the respective second panels (11).
